# EUROPEAN PATENT APPLICATION

(11) **EP 2 070 589 A1**
(43) Date of publication of application: **17.06.2009**
(21) Application number: 07024057.7
(22) Date of filing: 12.12.2007
(51) Int. Cl.: B01J 2/02, B01J 2/18

(54) **Vibrating prilling bucket for granulation of a fluid substance**

(71) Applicant: UREA CASALE S.A., 6900 Lugano-Besso (CH)
(72) Inventor: Rizzi, Enrico, 22070 Casnate con Bernate (CO) (IT)
(74) Representative: Zardi, Marco

(57) **Abstract**

A vibrating and rotating prilling bucket (15) for granulation of a fluid substance (U), said bucket (15) comprising a perforated side wall (15a) and vibrating devices (51, 52) arranged to deliver a force with constant direction (A-A). In a preferred embodiment, the vibrating unit comprise two counter-rotating vibrators delivering rotating forces which balance each other perpendicularly to said constant direction (A-A.

## Description

### Field of application

The present invention relates to a prilling bucket for the granulation of a fluid substance.

The term prilling bucket is used with reference to a bucket with a perforated side wall, to be mounted inside a prilling tower, fed with said liquid substance and rotated at a suitable speed, so that a flow of droplets of said fluid substance is ejected through the perforated side wall.

### Prior Art

It is known art to convert a given fluid substance into solid granules by means of a prilling tower wherein small droplets of the fluid substance flow downward and in countercurrent to a cooling medium, e.g. air. The small droplets are solidified under the action of the cooling medium and spherical or quasi-spherical granules are obtained. Prilling towers are used for example at the end stage of an urea plant, where liquid urea, with high degree of purity, is solidified into granules which constitute the final product.

A known way of producing said flow of small droplets is to feed the liquid substance to a rotating, perforated container located on top of the prilling tower, also known as prilling bucket.

More in detail, a known prilling bucket substantially comprises a body connected to a rotating shaft, and having a perforated side wall. The fluid substance is fed to the bucket by a suitable feeding duct, for example coaxial to the rotating shaft, and small droplets are produced and ejected, by centrifugal force, through the perforated side wall.

It is also known to vibrate the prilling bucket, normally according to the same axis of rotation, in order to break the liquid jets exiting the perforated side wall and improve monodispersion (that is uniformity in size and shape) of the droplets. A vibrating prilling bucket, according to known art, is equipped with a suitable vibrating unit, for example a pneumatic turbine vibrator. A rotating and vibrating prilling bucket is disclosed in WO 2004/101131.

It should be noted that good monodispersion of the droplets is difficult to obtain, and for some products (such as urea) uniform size and shape of the solid granules dramatically influences the value of the product. The process involving formation and break-up of the liquid jets is quite complex and is not easy to foresee the negative or positive influence of any structural modification of the bucket. Moreover, the bucket must be adapted for long-term and reliable operation.

It should also be noted that a rotating and vibrating prilling bucket is subjected to a relevant mechanical stress, including alternate stress, and must be carefully designed. This is true especially in large plants where the bucket rotates at high speed (such as 200-300 rpm).

So, the realization and optimization of a prilling bucket is a challenging task, and a continuous need is felt to improve the known technique.

### Summary of the invention

The technical problem underlying the present invention is to improve the known technique of prilling buckets, with an aim to obtain a better monodispersion of the liquid droplets and, hence, to obtain a final product of a higher quality, with reliable long-term performance of the bucket itself.

This problem is solved according to the invention by a vibrating prilling bucket for granulation of a fluid substance, said bucket comprising a body with a perforated side wall substantially symmetrical with respect to an axis, and further comprising a vibrating engine, characterized in that said vibrating engine is arranged to deliver, during operation, a vibration-driving force having a substantially constant direction according to said axis of the bucket.

Said substantially constant direction of the vibration-driving force is also referred to as axis of vibration, and is parallel or coincident with said axis of the bucket.

The term vibrating engine is used with general reference to vibration imparting means, comprising for example vibrators and relative feeding and/or connecting means.

According to embodiments of the invention, the prilling bucket is adapted to rotation around an axis, and direction of the vibration-driving force, namely the axis of vibration, is parallel to, or coincident with, the axis of rotation. Normally the prilling bucket is installed on top of a vertical prilling tower, so that the axis of rotation and the axis of vibration are both vertical.

According to one aspect of the invention, said vibrating engine is arranged to deliver a plurality of rotating forces, said forces being mutually balanced according to directions perpendicular to the axis of vibration, so that the resulting vibration-driving force transmitted to the bucket has a variable module but is constantly directed according to said axis of the bucket.

The term "rotating force" means a force which can be schematized with a vector rotating around a given fixed axis, as a function of time.

According to a further aspect of the invention, the vibrating engine is arranged to deliver counter-rotating forces lying on planes parallel to said axis of the bucket, i.e. to axis of vibration. For example, two counter-rotating forces are generated by the vibrating engine and each of said two forces is lying on a plane parallel to the axis of vibration, so that in each instant of time, their components according to said axis of vibration are added, while other components are mutually balanced.

In a preferred embodiment, the vibrating engine comprises counter-rotating rotors to deliver said counter-rotating forces. More preferably, the engine comprises a pair of vibrators with respective identical unbalanced rotors or turbines, disposed to be counter-rotating at the same speed; the term unbalanced turbine is used to mean a turbine with an eccentric distribution of mass, so that rotation of the turbine produces a force rotating on a plane perpendicular to axis of rotation.

More in detail, and according to preferred embodiments, a first turbine is arranged to rotate around a first axis and a second turbine, identical to the first, is arranged to counter-rotate in phase with the first turbine, at the same speed and around a second axis parallel to said axis of rotation of the first turbine, each of said first axis and second axis of rotation of the turbines lying on a plane perpendicular to said axis of vibration. Preferably said first axis of rotation and second axis of rotation lie on the same plane perpendicular to the axis of vibration.

Due to said arrangement, the turbines deliver a first rotating force and a second rotating force having the same module and lying on planes parallel to the axis of vibration; components of said rotating forces perpendicular to the axis of vibration are always equal and opposite, and thus balance each other. The resulting force is then directed according to said axis of vibration. This will be more evident with the help of non-limiting examples given in the detailed description.

According to another aspect of the invention, said turbines are mechanically coupled to maintain phased counter-rotation in a reliable manner. In a preferred embodiment, a first gear wheel is fixed to the shaft of the first turbine, and a second gear wheel is fixed to the shaft of the second turbine, the first gear wheel being engaged with said first gear wheel. Phased rotation helps to keep a constant balance of forces perpendicular to the axis of vibration.

In a preferred embodiment, the vibrators are pneumatically operated, that is powered by compressed air. Pneumatic vibrators are preferred because of their ability to operate under the high working temperature of the bucket (around 150°C for processing urea).

According to embodiments of the invention, the vibration-driving force can be transmitted to the whole body of the prilling bucket or to a part thereof, namely the perforated side wall only. To this purpose, an embodiment of the invention provides said vibrating engine coupled to the perforated side wall of the bucket, and a flexible connection between the side wall and other parts of the bucket, namely top and bottom flanges, said flexible connection acting as a mechanical filter for the vibration-driving force.

An object of the invention is also a granulation apparatus with a prilling tower equipped with at least one prilling bucket as above. Two or more prilling buckets, running in parallel, can be used in large or very large capacity plants.

The inventions has a number of advantages. It has been found that monodispersion of droplets is improved by the "pure" vertical vibration provided by the invention, compared to a known prilling bucket wherein the vibrating engine is unbalanced, and vibrations are transmitted also in directions other than the main axis of vibration, or discharged to the supports of the bucket and/or the shaft.

Furthermore, the invention results in a less severe mechanical stress of the supports and bearings of prilling bucket. Reduced stress improves the reliability and makes easier the achievement of higher rotating speed and/or higher frequency of vibration, as required especially in large-capacity units.

Another advantage is that the balanced vibration can be obtained with low-cost and commonly available vibrating units, for example pneumatic turbine vibrators, requiring no or minor modification for use in the prilling bucket according to the invention.

Further features and the advantages of the invention will become clearer from the following description of an indicative and non-limiting example of embodiments thereof, made with reference to the attached drawings.

### Brief description of the figures

Fig. 1 shows a simplified scheme of a prilling tower equipped with a prilling bucket according to the invention.
Fig. 2 is a schematic cross section of a prilling bucket according to an embodiment of the invention.
Fig. 3 is a schematic cross section of a prilling bucket according to another embodiment of the invention.
Fig. 4 is a cross section according to planes IV-IV as indicated in Figs. 2 and 3.
Fig. 5 is a scheme of the forces produced by vibrating devices of the prilling bucket of Fig. 2 or 3.

### Detailed description of a preferred embodiment of the invention

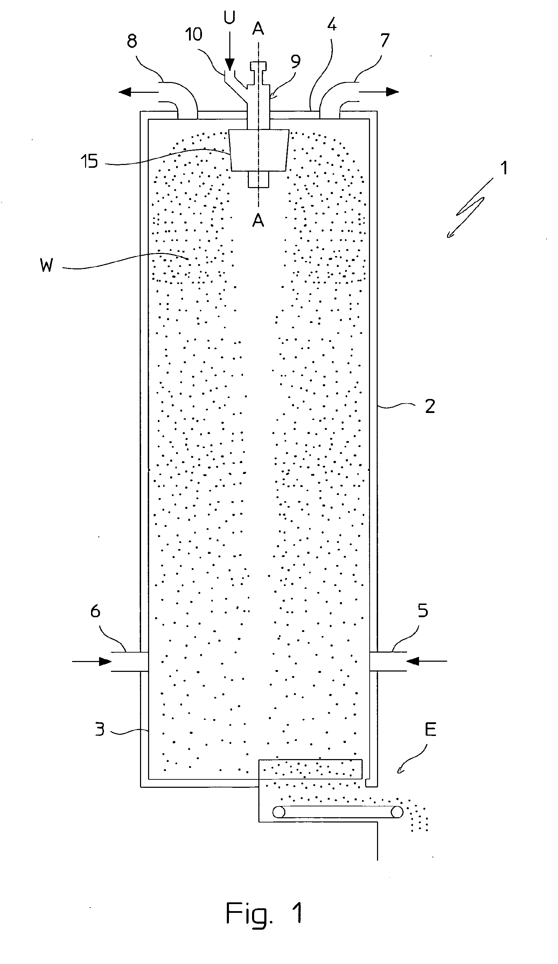

With reference to Fig. 1, a prilling tower 1 is shown, having a cylindrical shell 2 with vertical axis A-A closed by a base plate 3 and a top wall 4.

Ducts 5 and 6 are provided near base plate 3, for input of a continuous rising flow of a cooling medium (for example air) through tower 1. Ducts 7 and 8 are provided at the top wall 4 for discharging said cooling medium.

A fluid substance U to be granulated is fed to a prilling bucket 15 installed at top of the tower 1. In operation, the prilling bucket 15 is rotated around axis A-A and vibrated according to direction of the same axis A-A, producing a downward flow W of droplets of substance U, which are cooled by the rising cooling air until they solidify into spherical or substantially spherical granules. Solid granules are discharged through a bottom aperture E.

More in detail, the fluid substance U is fed through a feeding duct 10 connected to an axial duct 9 crossing the top wall 4. The droplets of said substance U are produced by a perforated side wall of the prilling bucket 15.

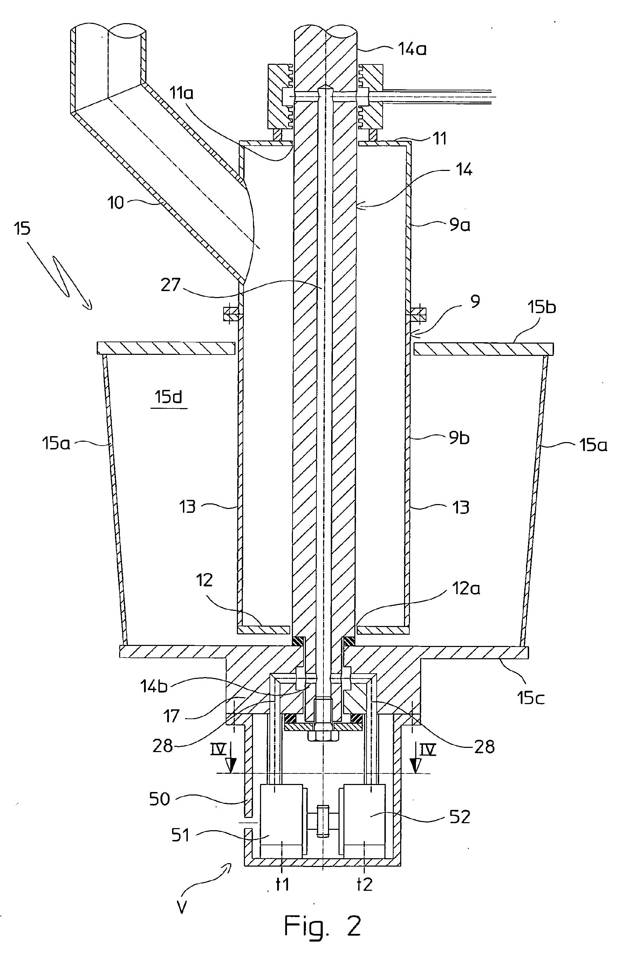

The bucket 15 (Fig. 2) has a frusto-conical body comprising top and bottom flanges (or bases) 15b, 15c and a perforated side wall 15a substantially symmetrical around axis A-A. Said flanges and perforated wall define a chamber 15d adapted to contain a given amount of fluid substance U.

The bucket 15 is connected to a motorized driving shaft 14, rotating around axis A-A and powered by a suitable motor (not shown).

The bucket 15 is also equipped with a vibrating engine V, adapted to provide a vibration of the bucket itself at a suitable frequency and according to said axis A-A, which can also be referred to as axis of vibration.

The vibrating engine V is arranged to deliver a variable (pulsating) force which is constantly directed according to A-A, with no or negligible component directed otherwise. In the preferred embodiment of the figures, this is accomplished by two identical vibrators 51, 52 with in-phase counter-rotating unbalanced turbines, which are arranged so that they balance each other in directions other than A-A.

The prilling bucket 15 is now described in greater detail with reference to the embodiments shown. The duct 9 has a first portion 9a above plate 15b and extending outside the shell 2, connected to duct 10, and a second portion 9b extending inside the chamber 15d. Top and bottom of duct 9 are closed by respective plates 11, 12. The portion 9b of duct 9 is equipped with circumferential slits 13 suitable for delivering the fluid substance U inside chamber 15d.

The motorized shaft 14 is coaxial to duct 9, passing through openings 11a, 12a of plates 11 and 12 respectively, with possible interposition of gaskets (not represented). A reduced-diameter portion 14b of shaft 14 is connected to a base 17 of bottom flange 15c.

Connection between shaft 14 and bottom flange 15c is such that rotation of shaft 14 puts into rotation the flange 15c itself and hence wall 15a and top flange 15b. Preferably, the connection between shaft 14 and bottom flange 15c allows axial displacement between the shaft and the flange. This connection, being not part of the invention, is not described in further detail. A connection according to WO 2004/101131, for example, can be used.

A carter 50 is fixed to said base 17 of bottom flange 15c, housing the vibrators 51, 52. Said vibrators 51, 52 are powered by a compressed air duct 27 coaxial to shaft 14. Air is fed in parallel to vibrators 51 and 52 by further ducts 28.

Each of vibrators 51, 52 comprises a strongly unbalanced turbine or rotor, producing a rotating force in planes parallel to A-A; traces t1 and t2 of said planes are shown in Fig. 2 for the sake of clarity.

The vibrators 51, 52 are arranged so that the respective turbines are counter-rotating; furthermore, the turbines are mechanically connected to be maintained in phase, so that forces other than vertical are mutually balanced and the resulting force is substantially directed according to the vertical direction, i.e. according to axis A-A.

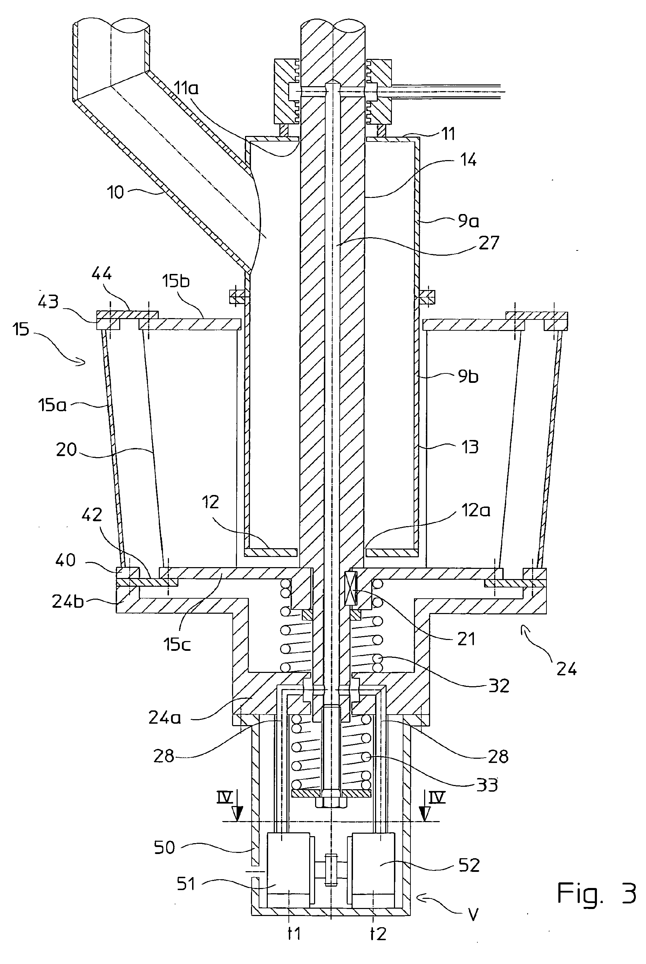

A further embodiment is shown in Fig. 3. Elastic rings 42, 44 provide a flexible connection between the perforated side wall 15a and flanges 15b and 15c, while the side wall 15a is firmly connected, through a further flange 24, to the vibrating units 51, 52. The flexible connection of said rings 42, 44 substantially acts as a mechanical filter, i.e. the vibration-driving force imparted to the side wall 15a is substantially not transmitted to the plates 15b, 15c. Rings 42, 44 are substantially rigid in the torsional direction, in order to transmit driving torque from bottom flange 15c to flange 24 and side wall 15a. Blades 20 are provided to connect flanges 15b, 15c.

The upper and lower rims of the side wall 15a have fixing portions 40, 43 with increased thickness to provide suitable room for fixing means. As an example, a first set of screws connects a region 24b of flange 24 to said fixing portion 40 with interposition of elastic ring 42, and a second set of screws is fixing the elastic ring 42 to the flange 15c.

The flange 24 is elastically supported, in the axial direction A-A, to the end of the shaft 14, by a first spring 32 and a second spring 33. Other elastic means, e.g. elastomers, may be used; damping means can also be provided, if necessary. Fig. 3 also shows a key 21 coupling shaft 14 to flange 15c of the prilling bucket 15.

The carter 50, in this embodiment, is fixed to a portion 24a of flange 24. Vibrating engine V can be realized as above, with vibrators 51 and 52.

In further embodiments of the invention, said flexible connection can be made with one or more expansion joint(s), e.g. two expansion joints mounted in the same positions as elastic rings 42, 44.

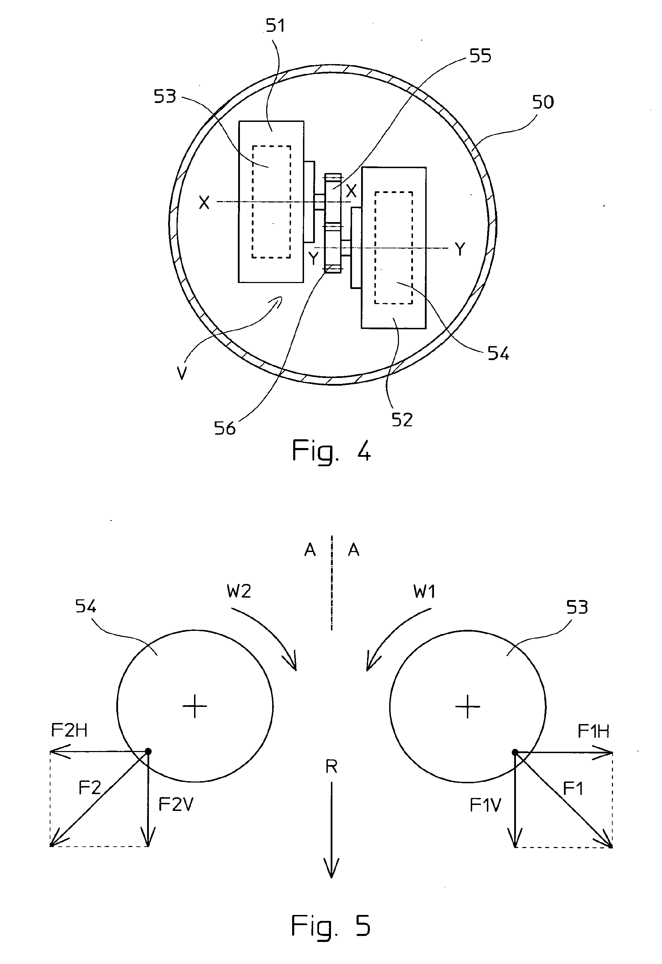

Details and operation of vibrators 51, 52 is now described with reference to Figs. 4 and 5.

The vibrators 51, 52 comprise respectively a first turbine 53 rotating around axis x-x and a second turbine 54 rotating around axis y-y. Axes x-x and y-y are parallel each other and lie on a plane perpendicular to A-A. Turbines 53 and 54 deliver forces rotating on a plane perpendicular to respective axes x-x and y-y, that is said rotating forces lie on planes parallel to A-A and having traces t1 and t2 as shown in Fig. 2.

Turbines 53 and 54 are kept in phase by a first gearwheel 55 coupled to turbine 53 and a second gearwheel 56 coupled to turbine 54 and engaged with the first gearwheel 55, with transmission ratio 1:1. According to one feature of the invention, known vibrators are modified to mount the gearwheels, e.g. keyed to the same shaft of the turbines.

Vibrators 51, 52 are not described in greater detail as they are commercially available items.

Referring to fig. 5, turbine 53 rotates with speed ω1 and turbine 54 counter-rotates with speed ω2, having the same value of speed ω1 but opposite sense. Turbines 53 and 54, due to their arrangement, deliver forces F1 and F2 having equal module F, opposite horizontal components F1H, F2H and concurrent vertical components F1V, F2V.

Forces F1 and F2 are rotating forces, that is vectors of forces F1 and F2 rotates around the same axis of turbines 53 and 54, with speed ω1 and ω2 respectively. Due to phase rotation, vectors of forces F1 and F2, in each instant of time, maintain opposite horizontal components and concurrent vertical components.

Hence, in each instant of time horizontal forces balance each other, while vertical components are added. As a result, a vertical force R pulsating between +2F and -2F is transmitted to the bucket 15. It can be appreciated that force R has a substantially constant direction, according to axis A-A, which in the given example is the vertical direction.

Due to gearwheels 55 and 56, phased rotation is maintained and horizontal components F1H, F2H have always same value and opposite direction, so that they balance each other and direction of R is kept substantially constant and directed according to A-A.

It should also be noted that more than two (e.g. four) vibrators may be used in a single bucket 15.

The invention operates as follows. The liquid substance U, for example purified urea produced in a suitable plant, is fed through ducts 10 and 9 to the prilling bucket 15, which produces a downward flow W of droplets (Fig. 1) into the tower 1. The force R delivered by vibrators 51 and 52 is transmitted, as a vibration-driving force, to the bucket 15. More in detail, the force R causes alternate, vibrating motion of perforated side wall 15a and of the liquid jets exiting the perforated side wall itself. Said vibration is a disturbance which helps the breaking up of the liquid jets into a stream of uniform droplets.

The embodiment of Fig. 3 has the advantage of a further improved monodispersion and a reduced vibrating mass, as flanges 15b and 15c are not put into vibration together with side wall 15a. Also the fluid mass between flanges 15b and 15c is not put into vibration.

The balanced action of vibrators 51 and 52 (Figs. 4-5) reduces mechanical stress and has been found to improve the formation of spherical, monodispersed droplets.

## Claims

1. A vibrating prilling bucket (15) for granulation of a fluid substance (U), said bucket comprising a body with a perforated side wall (15a) substantially symmetrical with respect to an axis (A-A), and further comprising a vibrating engine (V), **characterized in that** said vibrating engine (V) is arranged to deliver, during operation, a vibration-driving force (R) having a substantially constant direction according to said axis (A-A) of the bucket (15).

2. A prilling bucket according to claim 1, wherein said vibrating engine (V) is arranged to deliver a plurality of rotating forces (F1, F2), said forces being mutually balanced according to directions perpendicular to said axis (A-A).

3. A prilling bucket according to claim 2, wherein the vibrating engine is arranged to deliver counter-rotating forces (F1, F2), each lying on a plane (t1, t2) substantially parallel to said axis (A-A).

4. A prilling bucket according to claim 3, wherein the vibrating engine (V) comprises a first rotor (53) arranged to rotate around a first axis (x-x) and a second rotor (54) arranged to counter-rotate around a second axis (y-y) parallel to said first axis (x-x), to deliver said counter-rotating forces (F1, F2), each of said axis of rotation (x-x) of the first rotor (53) and axis of rotation (y-y) of the second rotor (54) lying on a plane perpendicular to said axis (A-A) of the vibration-driving force (R).

5. A prilling bucket according to claim 3 or 4, wherein said rotors (53, 54) are mechanically coupled to maintain their rotation in phase.

6. A prilling bucket according to claim 5, wherein a first gear wheel (55) is coupled to the first rotor (53), and a second gear wheel (56) is coupled to the second rotor (54), said first gear wheel being engaged with said second gear wheel.

7. A prilling bucket according to any one of preceding claims, wherein said vibrating engine (V) is pneumatically operated.

8. A prilling bucket according to claim 7, wherein said vibrating engine (V) comprises identical pneumatic turbine vibrators, said vibrators comprising respective unbalanced rotors to deliver said rotating forces.

9. A prilling bucket according to any one of preceding claims, wherein said vibrating engine (V) is connected to the perforated side wall (15a) of the bucket (15), and said bucket (15) comprises flexible connecting means (42, 44) between said perforated side wall (15a) and top and bottom flanges (15b, 15c) of the same, said flexible connection means being adapted to act as a mechanical filter for the vibrating action.

10. Apparatus for the granulation of a fluid or semi-fluid substance (U), comprising a prilling tower (1) and at least one prilling bucket (15) according to any one of preceding claims, said bucket (15) being located inside said tower (1) and connected to feeding means (10) of said substance (U) and to a rotating driving shaft (14).

11. Apparatus according to claim 10, said substance (U) being urea
